Europäisches Patentamt

**European Patent Office**

Office européen des brevets

(19)

(11) Veröffentlichungsnummer: **0 074 542**
A2

(12) **EUROPÄISCHE PATENTANMELDUNG**

(21) Anmeldenummer: 82107890.4

(22) Anmeldetag: 27.08.82

(51) Int. Cl.³: **B 23 B 31/12**

(30) Priorität: 14.09.81 DE 3136385

(43) Veröffentlichungstag der Anmeldung:
23.03.83 Patentblatt 83/12

(84) Benannte Vertragsstaaten:
AT CH DE FR GB IT LI

(71) Anmelder: EMAG MASCHINENFABRIK GMBH
Austrasse 24
D-7335 Salach/Württemberg(DE)

(72) Erfinder: Hessbrüggen, Norbert
Sudetenstrasse 47/2
D-7321 Eschenbach(DE)

(74) Vertreter: Zmyj, Erwin, Dipl.-Ing.
Postfach 95 04 28
D-8000 München 95(DE)

(54) Spannfutter, insbesondere Greiferfutter.

(57) Das Spannfutter 1 weist schwenkbar gelagerte Spannhebel 3 auf, die um Achsen 8 schwenkbar sind, welche parallel zur Futterachse 4 stehen. An den freien Enden sind die Spannhebel 3 mit als Rollen ausgebildeten Spannasen 6 versehen, deren Drehachsen 12 parallel zur Futterachse 4 verlaufen. Der Abstand zwischen der Schwenkachse 8 des Spannhebels 3 zur Spannase ist größer als der Abstand dieser Schwenkachse 8 von der Futterachse 4, so daß sich beim Spannen des Werkstückes schräg auf das Werkstück einwirkende Spannkräfte ergeben, die mit zunehmendem Durchmesser des Werkstückes zunehmen. Die Spann- bzw. Haltekraft nimmt also mit zunehmendem Werkstückdurchmesser und damit mit zunehmendem Werkstückgewicht zu. Außerdem wird der Spannbereich vergrößert, d.h. es können bei gleich großen Futtern größere Werkstückdurchmesser gespannt werden, als dies bei Spannhebellängen der Fall ist, die dem Abstand der Schwenkachse des Spannhebels zur Futterachse entsprechen.

Fig.1

EP 0 074 542 A2

Spannfutter, insbesondere Greiferfutter

Die Erfindung bezieht sich auf ein Spannfutter, insbesondere Greiferfutter, mit mehreren um parallel zur Futterachse angeordneten Schwenkzapfen schwenkbar gelagerten und synchron zueinander antreibbaren Spannhebeln, deren freie Enden als Spannasen zum Erfassen eines Werkstückes ausgebildet sind.

Es sind bereits Spannfutter bekannt (DE-PS 23 35 390) bei denen der Abstand der Spannase zum Schwenkpunkt des Spannhebels dem Abstand des Schwenkpunktes von der Spannfutterachse entspricht. Bei diesen Ausgestaltungen bewegt sich aufgrund der angegebenen geometrischen Verhältnisse die Spannase auf die Futterachse zu, wodurch ähnlich wei bei den bekannten in radialen Führungen geführten Backen eines Dreibackenfutters die Spannasen im wesentlichen in radialer Richtung auf die Futterachse beim Spannvorgang bewegt werden. Hierdurch bleibt das Verhältnis von am Spannhebel eingeleiteter Kraft zu der auf das Werkstück einwirkenden Kraft über den unteren Schwenkbereich also für kleine Werkstückdurchmesser nahezu konstant, wobei die eingeleitete Kraft im wesentlichen der auf das Werkstück einwirkenden Kraft entspricht.

Bei einem Spannfutter, und insbesondere bei einem Greiferfutter, das einen sehr großen Spannbereich aufweisen soll, werden somit einmal Werkstücke mit sehr kleinem und zum anderen Werkstücke mit sehr großem Durchmesser erfaßt, die, sieht man von sehr großen Längenunterschieden der Werkstücke ab, mit zunehmendem Durchmesser zwangsläufig an Gewicht zunehmen. Gerade bei Greiferfuttern kann es aber erforderlich sein, die Spannkraft
dem jeweiligen Werkstückgewicht anzupassen, damit sichergestellt ist, daß im Durchmesser größere und damit in
der Regel schwerere Werkstücke sicher erfaßt werden und
kleinere Werkstücke nicht unverhältnismäßig stark gespannt werden.

Aufgabe der Erfindung ist es, in einfacher Weise eine Anpassung der Spannkraft an die Werkstückgröße bezogen
auf den Durchmesser zu erreichen, ohne daß eine Steuerung
der auf die Hebel eingeleiteten Kraft erforderlich wäre,
wobei der Spannbereich des Spannfutters möglichst groß
sein soll.

Diese Aufgabe wird erfindungsgemäß dadurch gelöst, daß der
Abstand jeder Spannase zur Schwenkachse des zugehörigen
antreibbaren Spannhebels größer als der Abstand dieser
Schwenkachse zur Spannfutterachse ist.

Mit dieser Ausgestaltung wird aufgrund der Tatsache, daß
die Spannase beim Schließen des Futters sich nicht auf
die Futterachse zu sondern an dieser vorbei bewegt, ein
Klemmeffekt zwischen dem Spannhebel und dem Werkstück
erzielt, der zu größeren Festhaltekräften führt. Dieser
Klemmeffekt ist darauf zurückzuführen, daß die Spannkraft
unter einem Winkel, der sich mit zunehmender Verschwenkung des Hebels nach außen verkleinert, auf das Werkstück einwirkt. Bei exakt radial auf das Werkstück einwirkender Spannkraft entspricht die eingeleitete Kraft
der Festhaltekraft. Da diese eingeleitete Kraft aufgrund der erfindungsgemäßen Ausgestaltung unter einem
Winkel einwirkt, ergibt sich der bereits erwähnte Klemmeffekt, der zu einer Vergrößerung der Festhaltekraft führt, welche bei im Durchmesser größeren Werkstücken wesentlich größer als bei den im Durchmesser
kleineren Werkstücken ausfällt. Bei einem Spannfutter
mittlerer Größe mit einem Spannbereich zwischen 80 bis
280 mm beträgt das Verhältnis der Festhaltekräfte ungefähr 1 zu 2, d. h. beim größten Spanndurchmesser ist
die Festhaltekraft bei gleich großer in das Futter
eingeleiteten Antriebskraft für die Spannhebel 2 bis
2 1/2 mal so groß wie beim kleinsten Spanndurchmesser,
wobei die Hebelverlängerung so groß vorgenommen wurde,
daß die Spannasen noch an den Schwenklagerzapfen dem jeweils benachbarten Spannhebel vorbeischwenken können.

Bei dem bekannten Spannfutter, bei welchem die Spannhebellänge dem Abstand zwischen der Schwenkachse des
Spannhebels und der Futterachse entspricht, tritt zwar
mit zunehmendem Werkstückdurchmesser ebenfalls eine
Spannkraftverstärkung ein, die jedoch über einen sehr
großen Schwenkbereich der Spannhebel kleiner ausfällt
als bei der vorliegenden Erfindung. Gegen Ende des
Schwenkbereichs ist dem Winkel,unter welchem die Spannkraft auf das Werkstück einwirkt, so gering, daß ein
Selbstklemmeffekt eintritt, d. h. das Futter muß unter
Krafteinwirkung geöffnet werden, weil sich die Hebel
am Werkstück festklemmen. Dieser Bereich ist für die
praktische Verwendung des Futters nicht mehr erwünscht.
Durch die Verlängerung der Spannhebel gemäß der Erfindung
wird der mögliche Spannbereich vergrößert, da der erwähnte Klemmeffekt erst bei einem wesentlichen grösseren
Werkstückdurchmesser eintritt. Durch die Erfindung wird
also erreicht, daß bei kleinen Werkstückdurchmessern die
Kraftverstärkung wesentlich größer ist als bei dem bekannten Spannfutter, wobei dieser Vorteil gleichzeitig mit dem Vorteil eines vergrößerten Spannbereichs des Futters auftritt, wenn man das bekannte Futter mit einem gleich großen Futter nach der Erfindung vergleicht. Das erfindungsgemäße Spannfutter weist also bei einer günstigeren Spannkraftverstärkung einen größeren Spannbereich auf.

Damit die eingeleitete Kraft möglichst verlustfrei auf das Werkstück übertragen werden kann, und damit es keine Oberflächenbeschädigungen durch Relativbewegungen zwischen der Spannasen und dem Werkstück gibt, sind in weiterer vorteilhafter Ausgestaltung der Erfindung die Spannasen als Rollen ausgebildet, die auf prallel zur Futterachse von den Spannhebeln hervorstehenden Drehzapfen drehbar gelagert sind.

Um die Bewegungen der Spannhebel in einfacher Weise synchron zueinander ablaufen zu lassen, ist in weiterer Ausgestaltung der Erfindung zum Schwenkantrieb eines jeden Hebels dieser mit einem koaxial zu seiner Schwenkachse angeordneten Zahnrad fest verbunden, wobei die Zahnräder der Spannhebel mit einem koaxial zur Futterachse drehbar gelagerten Zahnrad kämmen, und wobei eines der Zahnräder mit einer Antriebsvorrichtung in Verbindung steht. Diese Antriebsvorrichtung kann in vorteilhafter Ausgestaltung der Erfindung einen Antriebszylinder umfassen, dessen Kolbenstange mit einer Zahnstange fest verbunden ist, die mit einem der Zahnräder kämmt. Diese Art der Ausgestaltung der Antriebsvorrichtung eignet sich im wesentlichen nur für Greiferfutter, da der Arbeitszylinder mit dem für ihn notwendigen Platzbedarf leicht in einem Schwerkarm einer Ladevorrichtung untergebracht werden kann, zu der dieses Greiferfutter gehört.

Bei Verwendung des Spannfutters als Greiferfutter kann eine Verbesserung hinsichtlich möglicher Fluchthfehler beim Spannen des Werkstückes durch das Spannfutter der Drehmaschine dadurch erzielt werden, daß ein federnder Axialanschlag vorgesehen ist, der mehrere radial in Bezug auf das Spannfutter angeordnete Anlageleisten umfaßt, die im Bereich der Futterachse miteinander verbunden und in Richtung der Futterachse durch Führungsbolzen geführt sind, an denen sie kardanisch angehängt sind, wobei die Führungsbolzen in zentralen Führungen der Schwenkzapfen für die Spannhebel geführt und durch Federn abgestützt sind. Mit diesen untereinander verbundenen und abgefederten Anlageleisten läßt sich bei der Übergabe des Werkstückes vom Greiferfutter zum Spannfutter der Drehmaschine ein Axialschub auf das Werkstück ausüben, so daß es mit Sicherheit an den Anlageschultern des Spannfutters anliegt, wodurch Verkippungen des Werkstückes vermieden werden.

Damit im unteren Spannbereich dieser nicht zu sehr durch die Anlageleisten begrenzt wird, weisen in weiterer Ausgestaltung der Erfindung die Anlageleisten in der Nähe des Spannfutterzentrums den Spannasen angepaßte, in Schwenkrichtung des Spannvorganges der Spannhebel weisende Auskröpfungen auf. Da sich die Spannasen in diese Auskröpfungen einlegen können, kann das Spannfutter noch weiter geschlossen werden, so daß die untere Grenze des Spannbereichs noch weiter nach unten verschoben werden kann, obwohl der Spannbereich durch Verlängerung des Spannhebels nach oben erweitert wurde.

Damit der Schwenkbereich nach unten, d. h. in Richtung auf kleine Werkstückdurchmesser nicht durch die gemäß der Erfindung verlängerten Spannhebel eingeschränkt wird, empfiehlt es sich, daß die Spannhebel gekrümmt und mit der konkaven Seite in Schwenkrichtung des Spannvorganges angeordnet sind. Hierdurch ergibt sich im Bereich der Nabe des Spannhebels, mittels welcher er am Spannfutter gelagert ist,eine gewisse Versetzung des Spannhebels gegenüber einem exakt in radialer Richtung verlaufenden Spannhebel, wodurch im einwärts geschwenkten Zustand, d. h. bei sehr kleinen Werkstückdurchmessern, noch genügend Platz für die Spannase des benachbarten Spannhebels verbleibt.

Die Erfindung ist in der Zeichnung beispielsweise dargestellt. In dieser zeigen:

Fig. 1    eine Vorderansicht eines Greiferfutters nach der Erfindung;

Fig. 2    einen Schnitt nach der Linie II-II in Fig. 1; und

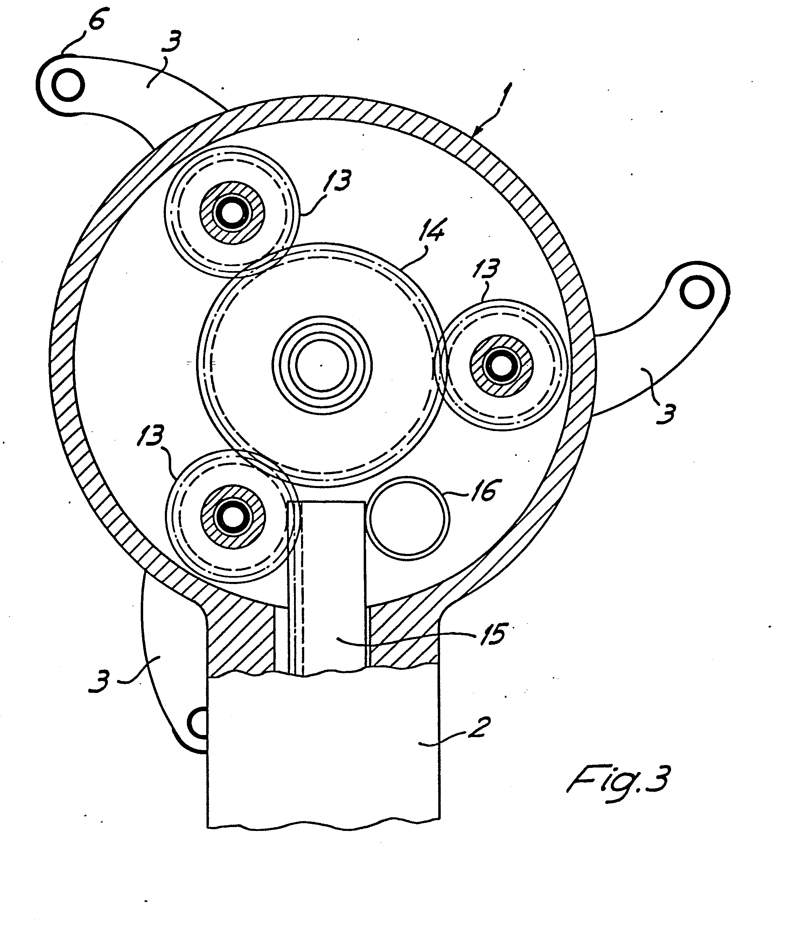

Fig. 3    einen Schnitt nach der Linie III-III in Fig. 2.

Ein insgesamt mit 1 bezeichnetes Greiferfutter ist an einem Greiferarm 2 einer nicht dargestellten Ladeeinrichtung für eine ebenfalls nicht dargestellte Drehmaschine angeordnet. Das Greiferfutter weist drei Spannhebel 3 auf, die um parallel zur Futterachse 4 gelagerte Schwenkzapfen 5 schwenkbar gelagert sind. Die Spannhebel 3 weisen an ihren äußeren Enden als Rollen ausgebildete Spannasen 6 auf, die auf Drehzapfen 7 drehbar gelagert sind, welche parallel zur Futterachse 4 von den Spannhebeln 3 hervorstehen.

Die Länge der Spannhebel 3, d. h. der Abstand der Spannnasen 6 von der mit 8 bezeichneten Schwenkachse des·
Spannhebels 3, ist größer als der Abstand der Schwenkachse 8 zur Futterachse 4. Diese erwähnten Abstände sind
durch die Maßpfeile 9 und 10 gekennzeichnet. Außerdem
ist durch einen Pfeil 11 die Schwenkbahn der Drehachse
12 der Spannasen 6 dargestellt. Hieraus ist ersichtlich,
daß die .  Spannase 6 eines jeden Spannhebels 3 an der
Futterachse 4 vorbeischwenkt.

Damit die Spannasen 6 bei kleinen Werkstückdurchmessern,
bei denen die Spannhebel 3 sehr weit nach innen geschwenkt
sind, nicht an den benachbarten Spannhebeln anstoßen, sind
die Spannhebel gekrümmt ausgeführt, wobei die konkave
Seite, welche mit 25 bezeichnet ist, in Schwenkrichtung
des Spannvorganges angeordnet ist. Hierdurch ergibt sich
eine Versetzung des Spannhebels im Bereich seiner mit
26 bezeichneten Nabe, wodurch auch bei kleinen Werkstückdurchmessern die Spannase 6 nicht an dem benachbarten Spannhebel anstößt. Durch die erwähnte längere
Ausbildung des Spannhebels als dies dem Abstand seiner
Schwenkachse von der Futterachse entspricht, wird der
Spannbereich vergrößert, d. h. es können größere Werkstücke bei gleicher Futtergröße gespannt werden, als
wenn die Länge der Spannhebel dem Abstand zwischen
seiner Schwenkachse und der Futterachse entsprechen
würde. Außerdem wird, wie bereits eingangs erläutert,
eine Spannkraftverstärkung bereits bei kleinen Werkstücksdurchmessern erzielt.

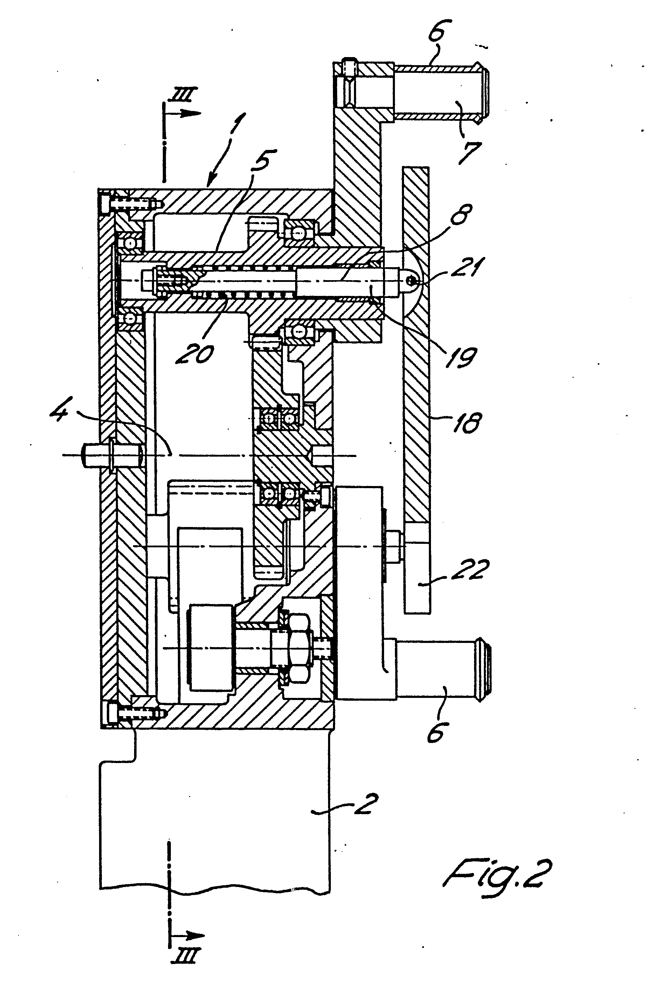

Zum Schwenkantrieb der Spannhebel 3 sind diese mit
koaxial zu ihren Schwenkachsen 8 angeordneten Zahnrädern
13 fest verbunden, die mit einem zentralen koaxial zur
Futterachse 4 drehbar gelagerten Zahnrad 14 kämmen. Eine im Greiferarm 2 verschiebbar geführte Zahnstange 15 kämmt mit einem der Zahnräder 13, welches zu diesem Zweck, wie aus Fig. 2 ersichtlich, in axialer Richtung länger als die übrigen Zahnräder 13 ausgeführt ist. Die Zahnstange 15 ist mit einer Kolbenstange eines nicht dargestellten Arbeitszylinders, der im Greiferarm 2 angeordnet ist, verbunden. Eine Führungsrolle 16 stützt die Zahnstange an ihrer Rückseite ab, damit sie stets im Eingriff mit dem Zahnrad 13 auch bei höherer Belastung bleibt.

Damit ein Werkstück, welches vom Greiferfutter 1 erfaßt ist, bei der Übergabe an das Spannfutter der Drehmaschine einen axialen Schub erhalten kann, um eine Anlage dieses Werkstückes an den Schultern des Spannfutters und damit eine Ausrichtung zu gewährleisten, ist ein federnder Axialanschlag 17 vorgesehen, der mehrere untereinander im Zentrum des Futters verbundene Anlageleisten 18 aufweist. Die Anlageleisten 18 verlaufen im wesentlichen in radialer Richtung und sind durch Führungsbolzen 19 geführt, die im Zentrum der Schwenkzapfen 5 geführt und durch Federn 20 abgefedert sind. Dieser Axialanschlag 17 ist mit den einzelnen Führungsbolzen 19 durch Gelenke 21 verbunden, die eine kardanische Aufhängung bewirken. Damit die Spannasen 6 der Spannhebel 3 möglichst weit nach innen schwenken können, um ein Werkstück mit möglichst kleinem Durchmesser erfassen zu können, sind die Anlageleisten 18 im Bereich des Zentrums des Futters mit Auskröpfungen 22 versehen, die in Schwenkrichtung der Spannhebel 3 weisen. Die Anzahl der Anlageleisten 18 und ihrer Führungsbolzen 19 richtet sich nach der Anzahl der Spannhebel, die in ihren zugeordneten Schwenkzapfen jeweils einen Führungsbolzen 19 aufnehmen.

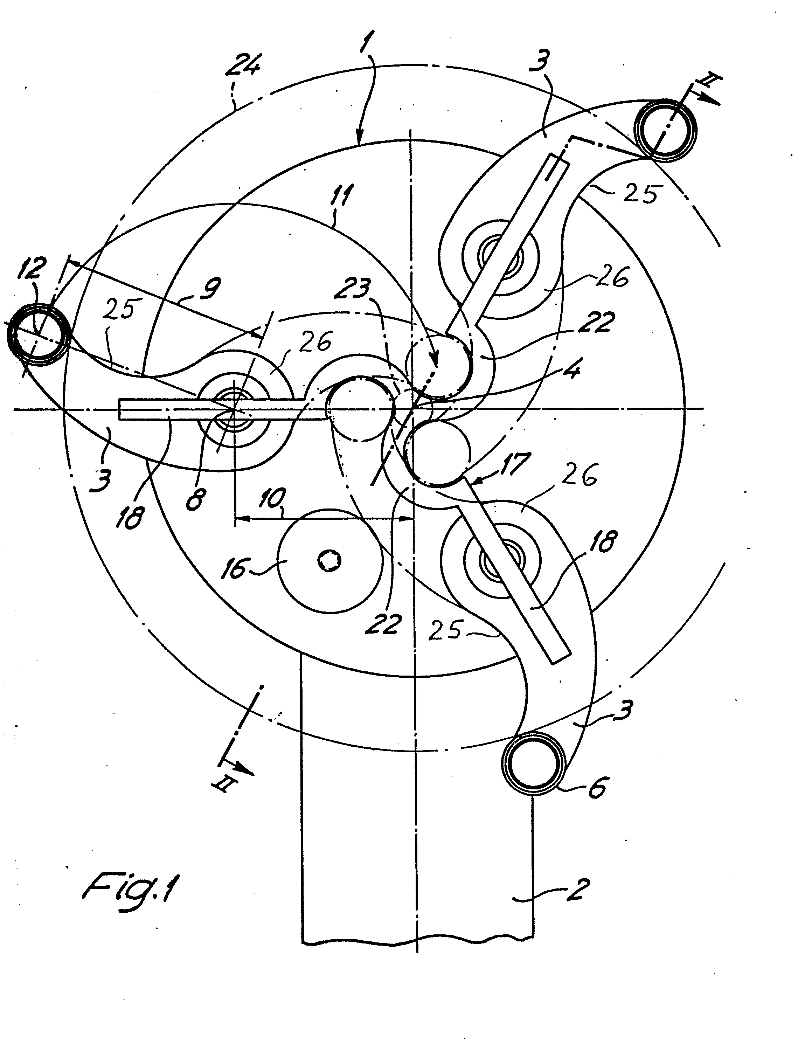

In Fig. 1 ist ein Werkstück mit dem kleinsten zu spannenden Durchmesser mit 23 und ein Werkstück mit dem größten noch durch das Futter erfaßbaren Durchmesser mit 24 bezeichnet.

Patentansprüche

1. Spannfutter, insbesondere Greiferfutter, mit mehreren um parallel zur Futterachse angeordneten Schwenkzapfen schwenkbar gelagerten und synchron zueinander antreibbaren Spannhebeln, deren freie Enden als Spannnasen zum Erfassen eines Werkstückes ausgebildet sind, dadurch gekennzeichnet, daß der Abstand (9) jeder Spannase (6) zur Schwenkachse (8) des zugehörigen antreibbaren Spannhebels (3) größer als der Abstand (10) dieser Schwenkachse (8) zur Spannfutterachse (4) ist.

2. Spannfutter nach Anspruch 1, dadurch gekennzeichnet, daß die Spannasen (6) als Rollen ausgebildet sind, die auf parallel zur Futterachse (4) von den Spannhebeln (3) hervorstehenden Drehzapfen (7) drehbar gelagert sind.

3. Spannfutter nach Anspruch 1 oder 2, dadurch gekennzeichnet, daß zum Schwenkantrieb eines jeden Spannhebels (3) dieser mit einem koaxial zu seiner Schwenkachse (4) angeordneten Zahnrad (13) fest verbunden ist, daß die Zahnräder (13) der Spannhebel (3) mit einem koaxial zur Futterachse (4) derehbar gelagerten Zahnrad (14) kämmen und daß eines der Zahnräder mit einer Antriebsvorrichtung (15) in Verbindung steht.

4. Spannfutter nach Anspruch 3, dadurch gekennzeichnet, daß die Antriebsvorrichtung einen Arbeitszylinder umfaßt, dessen Kolbenstange mit einer Zahnstange (15) fest verbunden ist, die mit einem der Zahnräder kämmt.

5. Spannfutter nach einem der Ansprüche 1 bis 4, dadurch gekennzeichnet, daß bei Verwendung des Spannfutters als Greiferfutter ein federnder Axialanschlag (17) vorgesehen ist, der mehrere radial in Bezug auf das Spannfutter angeordnete Anlageleisten (18) aufweist, die im Bereich der Futterachse (4) miteinander verbunden und in Richtung der Futterachse durch Führungsbolzen (19) geführt sind, an denen sie kardanisch (21) angehängt sind, wobei die Führungsbolzen (19) in zentralen Führungen der Schwenkzapfen (5) für die Spannhebel (3) geführt und durch Federn (20) abgestützt sind.

6. Spannfutter nach Anspruch 5, dadurch gekennzeichnet, daß die Anlageleisten (18) in der Nähe des Spannfutterzentrums den Spannasen (6) angepaßte, in Schwenkrichtung des Spannvorganges der Spannhebel weisende Auskröpfungen (22) aufweisen.

7. Spannfutter nach einem der Ansprüche 1 bis 6, dadurch gekennzeichnet, daß die Spannhebel (3) gekrümmt und mit der konkaven Seite (25) in Schwenkrichtung des Spannvorganges angeordnet sind.

Fig.1

Fig.2

0074542

$-\frac{2}{3}-$

Fig.3